# NEUE EUROPÄISCHE PATENTSCHRIFT

(11) **EP 1 010 658 B2**
(45) Veröffentlichungstag und Bekanntmachung des Hinweises auf die Entscheidung über den Einspruch: **20.12.2006**
(45) Hinweis auf die Patenterteilung: 10.09.2003
(21) Anmeldenummer: 99123119.2
(22) Anmeldetag: 18.11.1999
(51) Int. Cl.: B65H 63/06, G01B 11/10, G01B 7/04, D01H 13/22

(54) **Verfahren und Vorrichtung zur berührungslosen Garnüberwachung an einer Spinn- oder Spulmaschine**
Non-contact yarn monitoring method and device for a spinning or winding machine
Procédé et dispositif de surveillance sans contact de fil textile pour machine de filature ou bobinoir

(30) Priorität: 17.12.1998 DE 19858287
(43) Veröffentlichungstag der Anmeldung: 21.06.2000
(73) Patentinhaber: Saurer GmbH & Co. KG, 41069 Mönchengladbach (DE)
(72) Erfinder: Rienas, Gerhard, 52525 Heinsberg (DE)

(56) Entgegenhaltungen:
- EP-A- 0 250 089
- EP-A- 0 401 600
- EP-A- 0 423 380
- EP-A- 0 715 165
- WO-A-93/12028
- DE-A- 3 537 195
- DE-A- 19 756 883
- DE-U- 8 716 008
- GB-A- 711 688
- US-A- 4 931 658

## Beschreibung

Die Erfindung betrifft ein Verfahren zur berührungslosen Garnüberwachung an einer. Spinn- oder Spulmaschine gemäß dem Oberbegriff des Anspruches 1 sowie eine Vorrichtung gemäß dem Oberbegriff des Anspruches 8.

Zur Überwachung des laufenden Fadens an einer Spinn- oder Spulmaschine werden kapazitiv arbeitende Meßsysteme, optische Meßsysteme sowie Meßvorrichtungen, welche sowohl optische Meßwerte als auch kapazitive Werte detektieren, eingesetzt. Derartige Sensoreinrichtungen sind beispielsweise aus der EP 0 423 380 B1 bekannt.

An Spinn- und Spulmaschinen werden Changierbewegungen des laufenden Fadens gezielt durchgeführt, um zum Beispiel Kreuzspulen zu erzeugen oder Rillenbildung an der Oberfläche des üblichen garnschonenden Gummibelages der Abzugswalzen zu vermeiden.

Um derartige Bewegungen des Fadens im Meßfeld einer Sensoreinrichtung zu unterdrücken, wird der laufende Faden vor und hinter der Meßstelle durch ortsfeste Elemente wie Fadenaugen oder Fadenführungsbleche wie beispielsweise in der EP 0 423 380 B1 gezeigt, in einer ortsfesten Lage zu den Sensorelementen geführt. Nachteilig bei solchen Fadenführungselementen ist jedoch, daß durch die Berührung des Garns mit den Fadenführungselementen beziehungsweise durch die damit verbundene Reibung unerwünschte Einflüsse oder unerwünschte Veränderungen auftreten. Beispielsweise wird durch die Ösen oder Führungsschlitze die Oberfläche des Garnes aufgerauht.

Wird die Changierbewegung des laufenden Fadens im Meßbereich von Sensoreinrichtungen nicht unterdrückt, verursacht die ständige Veränderung von Lage beziehungsweise Abstand des Fadens zu den Sensorelementen Meßfehler, die die Zuverlässigkeit der Messungen und die Einhaltung der erforderlichen Garnqualität beeinträchtigen können.

Die DE 26 02 465 C2 beschreibt eine Vorrichtung bei der eine Streuscheibe zur Streuung von diffusem Licht mit zur Mitte hin abnehmender Höhe eingesetzt wird, um beim Messen des Querschnitts oder des Volumens eines laufenden Fadens in einem Changierbereich zuverlässigere Meßergebnisse zu erzielen. Wenn der Faden von der Mitte aus zu den Rändern der Streuscheibe hin changiert, überdeckt er dabei zunehmend die Streuscheibe mit einer größeren Länge als in Streuscheibenmitte, wo die Leuchtdichte größer ist. Die Anwendbarkeit dieser Vorrichtung ist auf optisch arbeitende Systeme mit inhomogener Leuchtdichte im Meßbereich beschränkt. Meßfehler, die durch Positionsveränderungen des Fadens auf die Streuscheibe zu oder von dieser weg entstehen, werden mit dieser bekannten Vorrichtung nicht kompensiert, und bei einer Spinn-oder Spulmaschine mit einer Vielzahl von Spinnstellen ist das Ausrüsten jeder Spinnstelle und ein manuell durchzuführender Wechsel der Streuscheibe sehr aufwendig. Die bei kapazitiven Meßverfahren ebenfalls auftretenden Meßfehler lassen sich mit dieser Vorrichtung nicht kompensieren.

Die EP 0 571 591 B1 beschreibt eine Vorrichtung zur Garnüberwachung, bei der der Faden im Bereich der Fadenchangierung überwacht wird und sich zwischen den Sensorflächen der Garnüberwachungsvorrichtung so hin- und herbewegt, daß er sich auf die jeweilige Sensorfläche zu- und von dieser wieder weg bewegt. Die Changierbewegung des Fadens wird dazu benutzt, die Sensorflächen der Garnüberwachungsvorrichtung zu reinigen um einer Funktionseinschränkung des Meßverfahrens durch Verschmutzung entgegenzuwirken. Wenn sich der laufende Faden während der zyklischen Changierbewegung der jeweiligen Sensorfläche bis auf einen geringen Abstand genähert hat, werden Staub und Faserablagerungen von der Oberfläche des Sensors mitgerissen. Die von dieser Garnüberwachungsvorrichtung gelieferten Meßergebnisse sind nur so lange zufriedenstellend, wie der zu messende Faden sich im Meßfeld der Sensoreinrichtung innerhalb bestimmter sehr enger Grenzen bewegt. Stärkere Bewegungen, mit denen diese engen Grenzen überschritten werden und die gerade beim Changieren des Fadens auftreten, können von der in der EP 0 571 591 B1 beschriebenen Garnüberwachungsvorrichtung nicht oder nur unzureichend eingeschränkt werden, so daß weiterhin Meßfehler beziehungsweise erhebliche Schwankungen der Meßergebnisse zu erwarten sind, die die Zuverlässigkeit und Verwertbarkeit von Meßwerten zur Garnüberwachung und damit möglicherweise die Garnqualität beeinträchtigen. Die Einschränkung der Fadenbewegung erfolgt durch Anschläge, über die der Faden läuft. Die Ausführung der Anschläge mit abgerundeten Kanten und der Einsatz von verschleißfestem Material weist auf erhebliche Reibung hin. Die Anschläge wirken als Fadenführungselemente und rufen die oben beschriebenen Nachteile von Fadenführungselementen hervor.

Aus der US 4,931.658 ist ein Verfahren und eine Vorrichtung bekannt, womit Ungenauigkeiten beim Messen des Durchmessers langgestreckter, präzise rund ausgebildeter Körper wie Draht, Kabel, Glasrohr oder Glasstab, kompensiert werden sollen, die dadurch entstehen, daß sich der Abstand des Körpers zur Meßeinrichtung verändert. Mittels einer Lichtquelle werden Abbilder des Körpers in zwei Bilderfassungseinrichtungen oder auch zwei Zeilensensoren, sogenannten CCD-Sensoren, erzeugt. Die beiden Sensoren sind so auf den Körper ausgerichtet, daß ihre optischen Achsen einen spitzen Winkel bilden, der zwischen 20 und 90 Grad betragen kann. Verändert sich der Abstand des Körpers zu den Sensoren, kommt es zu Veränderungen von Lage und Größe der Abbilder des Körpers in den beiden Sensoren. Durch Verknüpfung der jeweiligen zeitgleich erfaßten Meßwerte der beiden Sensoren werden korrigierte Meßwerte generiert.

Verfahren und Vorrichtung der US 4.931,658 erfordern den Einsatz von mindestens zwei Bilderfassungseinrichtungen oder zwei CCO-Sensoren. Derartige Sensoren sind gegenüber den an Spinn- und Spulstellen üblichen, kostengünstigen Fotoelementen erheblich teurer und aufwendiger. Bei Spinn- oder Spulmaschinen mit ihrer Vielzahl von Arbeitsstellen führen höhere Stückkosten, wie sie CCD-Sensoren verursachen, und eine Verdoppelung der Anzahl erforderlicher Sensoren zu wesentlich höheren Kosten der Maschine. Außerdem beansprucht der Einsatz von zwei CCD-Sensoren an einer Spinn- oder Spulstelle einen erheblichen Anteil von dem dort nur sehr begrenzt zur Verfügung stehenden Bauraum und stellt somit einen großen Nachteil dar.

Die vorgenannten Nachteile von CCD-Sensoren treffen in wesentlich größerem Maße für Bilderfassungseinrichtungen zu. Der Gegenstand der US 4,931.658 ist für den Einsatz zur Garnüberwachung an jeder einzelnen Arbeitsstelle von Spinn- oder Spulmaschinen, die eine Vielzahl von Arbeitsstellen aufweisen, zu aufwendig.

Der Erfindung liegt die Aufgabe zugrunde, die Garnüberwachung bei Positionsänderung des laufenden Fadens im Meßbereich zu verbessern.

Diese Aufgabe wird erfindungsgemäß durch ein Verfahren mit den Merkmalen des Anspruchs 1 und eine Vorrichtung mit den Merkmalen des Anspruchs 8 gelöst.

Vorteilhafte Ausgestaltungen der Erfindung sind Gegenstand der Unteransprüche.

Die Kompensation des jeweiligen Momentanwertes des Meßfehlers in Abhängigkeit von der ständig überwachten momentanen Position des Fadens im Meßbereich erlaubt eine gute und reproduzierbare Kompensation des Meßfehlers, unabhängig von der Art der Sensoreinrichtung, sowohl für optische wie auch für kapazitive Meßverfahren und sichert die Zuverlässigkeit und Verwertbarkeit der Meßwerte zur Garnüberwachung und damit die Garnqualität. Abgespeicherte Werte können als Standardwerte für andere Spinnstellen und Spinnmaschinen dienen, soweit diese Spinnstellen baugleich mit der Spinnstelle sind, an der die Messungen vorgenommen werden. Das Zuordnen und Speichern der Werte kann in Form einer Matrix erfolgen.

Eine genaue und universell einsetzbare Ermittlung der Fadenposition im Meßbereich erfolgt durch Detektion der Position des Fadens unmittelbar im Meßbereich der Sensoreinrichtung.

Durch die in einer alternativen Ausbildung der Erfindung durchgeführte Überwachung der Position des Fadenführers zum Ermitteln der durch die changierbewegung des Fadenführers hervorgerufenen Positionsänderung und der Ermittlung der jeweiligen Position des Fadens im Meßbereich der Sensoreinrichtung aus der Beziehung zwischen der Position des Fadens und der Position des Fadenführers ist eine platzsparende Lösung im Hinblick auf den an der Sensoreinrichtung nur begrenzt zur Verfügung stehenden Bauraum möglich. Zusätzlicher Aufwand an Sensorteilen zur Detektion der Fadenposition in diesem Bereich ist dabei nicht erforderlich. Sowohl die Lage des Fadenführers im zyklischen Ablauf der Changierbewegung wie auch die Lage und die geometrische Form von Speicherbügeln oder Führungsblechen, die den Längenunterschied zwischen Schräglage und Mittellage des Fadens während des Fadenführungshubes ausgleichen, um kurzzeitige Fadenspannungserhöhungen zu vermeiden, sind bei der Bestimmung der Position des Fadens im Meßfeld zu berücksichtigen. Einer Position des Fadenführers kann jeweils eine Position des Fadens im Meßbereich zugeordnet werden. Eine genaue Bestimmung der Position des Fadens im Meßbereich ist damit möglich, ohne eine Detektion im Meßbereich selbst durchzuführen. Die Positionbestimmung des Fadens aus der Position des Fadenführers kann dabei über ein mathematisches Verfahren erfolgen.

Die empirische Ermittlung von Korrekturwerten aus Messungen mit einem Vergleichskörper an unterschiedlichen im Meßbereich der Sensoreinrichtung verteilten Positionen ist schnell und einfach durchführbar. Zweckmäßig dient als Vergleichskörperfür die Messung ein Referenzfaden.

In einer weiteren alternativen Ausbildung der Erfindung wird eine Sensoreinrichtung an einer Stelle im Fadenlauf, an der keine Changierbewegung des Fadens stattfindet, zur Referenzwertermittlung eingesetzt. Eine Messung zur Bestimmung des Korrekturwertes jeweils an einer ersten Stelle im Fadenlauf, an der keine Changierbewegung des Fadens stattfindet, sowie eine zweite Messung an einer zweiten Stelle im Fadenlauf, an der der Faden die Changierbewegung vollführt und der Vergleich der Meßergebnisse aus beiden jeweils an derselben Stelle des Fadens erfolgten Messungen miteinander zeigt den positionsabhängigen Meßfehler besonders deutlich auf. Damit können auch Meßfehler, die von der Sensoreinrichtung zum Beispiel durch Verschmutzung oder Verstellung selbst erzeugt werden, erkannt und beseitigt werden.

Mit Sensoreinrichtungen, die gleichzeitig als Reiniger und Fadenwächter wirken sowie mit Sensoreinrichtungen, bei denen zur Meßwertdetektierung eine Kombination von optischem Meßverfahren und kapazitivem Meßverfahren dient, kann die Erfindung universell eingesetzt werden. Außerdem ist eine solche Ausführung der Sensoreinrichtung platzsparend und senkt durch Vereinigen der Funktionen den Aufwand an erforderlichen Teilen.

Eine Ausbildung der Sensoreinrichtung, bei der der Meßspalt in Richtung der Changierbewegung des Fadens verläuft, beugt einer Berührung von Teilen der Sensoreinrichtung durch den Faden und damit unerwünschter Reibung auch bei größerer Changierbewegung des Fadens vor.

Die Erfindung ermöglicht es, auch in den Changierbereichen des Fadens sehr genaue Meßwerte zu erhalten, ohne durch zusätzliche Fadenführelemente zum Einhalten einer bestimmten Meßposition des Fadens negative Einflüsse auf die Fadenoberfläche in Kauf nehmen zu müssen oder die Changierbewegung unerwünscht einzuschränken. Die Anordnung eines Fadenwächters, der berührungslos den laufenden Faden überwacht, oberhalb des Abzugswalzenpaares beziehungsweise im Fadenlauf dem Abzugswalzenpaar nachgeordnet erlaubt es zum Beispiel, mit sehr geringer Wickelspannung zu spulen.

Weitere Einzelheiten der Erfindung sind den Darstellungen der Figuren entnehmbar.

Es zeigt:
- Fig. 1: die Prinzipdarstellung einer Spinnstelle,
- Fig. 2: die Kennlinie einer Sensoreinrichtung,
- Fig. 3: eine Sensoreinrichtung mit Sensorelementen und Meßspalt,
- Fig. 4: eine Zuordnungsmatrix für Meßwerte.

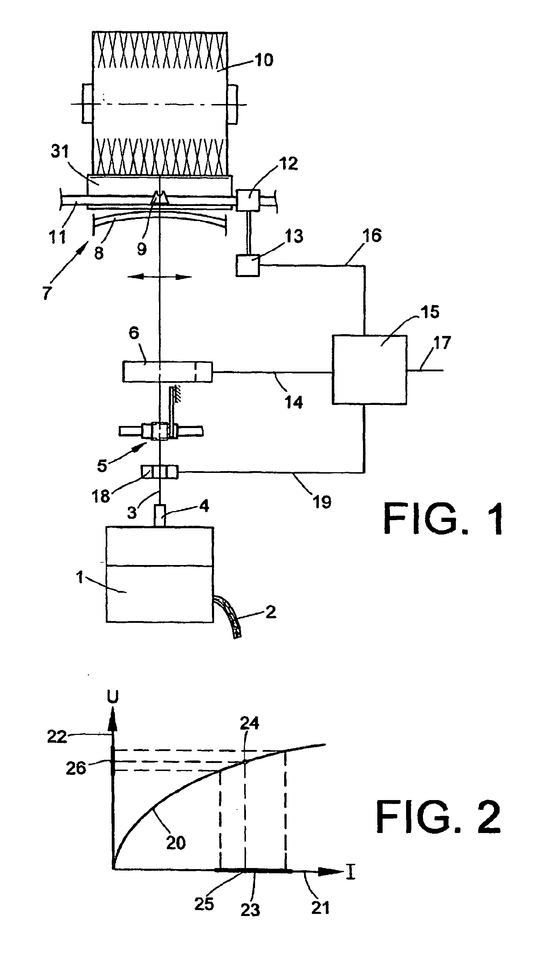

In die in Fig. 1 dargestellte Spinnbox 1 einer Open-End-Spinnmaschine wird ein Faserband 2 eingeführt. Der erzeugte Faden 3 wird aus der Spinnbox 1 über das Abzugsröhrchen 4 mittels des Abzugswalzenpaares 5 abgezogen, durchläuft eine Sensoreinrichtung 6 und wird über einen Speicherbügel 8 durch die Changierbewegung des Fadenführers 9 einer Fadenführeinrichtung 7 über eine vorgegebene Breite zu einer Kreuzspule 10 aufgewickelt. Die Kreuzspule 10 wird mittels einer Friktionswalze 31 angetrieben. Der Fadenführer 9 ist auf eine Fadenführerstange 11 aufgeklemmt, die von einem Fadenführergetriebe 12 hin- und herbewegt wird. Der Antrieb des Fadenführergetriebes 12 erfolgt durch eine Antriebseinrichtung 13.

Die Sensoreinrichtung 6 zur Überwachung des laufenden Fadens 3 ist oberhalb des Abzugswalzenpaares 5 im Changierbereich des Fadens 3 angeordnet. Die Sensoreinrichtung 6 ist über eine Leitung 14 mit der Datenverarbeitungsanlage 15 verbunden, die die von der Sensoreinrichtung 6 emittierten Signale empfängt. Über eine weitere Leitung 16 ist die Datenverarbeitungsanlage 15 mit der Antriebseinrichtung 13 verbunden. Die Antriebseinrichtung 13 kann als Elektromotor ausgeführt werden, und überdie Umdrehungen und die Winkelstellung der Motorwelle kann auf die Position des Fadenführers 9 und damit auf die Position des Fadens 3 im Meßbereich der Sensoreinrichtung 6 rückgeschlossen werden. Dabei werden im zyklischen Ablauf der Changierbewegung auch die Auswirkungen von Lage und geometrischer Form der Speicherbügel oder Führungsbleche auf die Position des Fadens 3 berücksichtigt. Die Datenverarbeitungsanlage 15 nimmt eine Zuordnung der jeweiligen Position des Fadens 3 im Meßbereich der Sensoreinrichtung 6 und dem jeweils von der Sensoreinrichtung 6 emittierten Meßwert vor. Damit werden keine weiteren zusätzlichen Bauteile zum Detektieren der Position des Fadens 3 benötigt und die Überwachung an der Antriebseinrichtung 13 kann auf einfache Weise an einer gut zugänglichen Stelle erfolgen, an der ausreichend Bauraum vorhanden ist.

In der Darstellung der Fig. 1 ist im Bereich zwischen Abzugsröhrchen 4 und Abzugswalzenpaar5 eine weitere Sensoreinrichtung 18 angeordnet, die über die Leitung 19 mit der Datenverarbeitungsanlage 15 verbunden ist. Im Ausführungsbeispiel der Fig. 1 findet an dieser Stelle keine Changierbewegung statt. Mit einer aus Vereinfachungsgründen nicht dargestellten, an sich bekannten Vorrichtung zur Erfassung und Überwachung der Bewegung des Fadens 3 in Laufrichtung, die zum Beispiel einen der Messung der Abzugsgeschwindigkeit des Fadens 3 dienenden, die Drehbewegung an einer Welle des Abzugswalzenpaares 5 erfassenden Initiator aufweist, lassen sich die mit der Sensoreinrichtung 18 erfaßten Meßwerte den an derselben Stelle des Fadens 3 erfaßten Meßwerten der Sensoreinrichtung 6 zuordnen. Durch Vergleich der jeweils von der Sensoreinrichtung 18 und der von der Sensoreinrichtung 6 erfassten Meßwerte wird der durch den Changiervorgang hervorgerufene Meßfehler ermittelt und der jeweiligen Position des Fadens 3 im Meßspalt der Sensoreinrichtung 6 zugeordnet. Die so ermittelten Werte werden abgespeichert. Die Werte können aber auch über die Leitung 17, über die die Datenverarbeitungsanlage 15 mit weiteren hier nicht dargestellten Spinnstellen, Datenverarbeitungseinrichtungen oder Spinnmaschinen kommuniziert, weitergeleitet werden.

Die Kennlinie 20 eines zum Beispiel als Sensorelement 29 eingesetzten Photoelementes zeigt in Fig. 2 die Abhängigkeit zwischen der auf, der Abszisse 21 aufgetragenen Lichtintensität 1 und der auf der Ordinate 22 aufgetragenen, zur Bildung des Signals des Photoelementes dienenden Spannung U. Die Kennlinie 20 verläuft nicht linear. Für die Messung wird abhängig von den Gamdaten, zum Beispiel abhängig vom Durchmesser des Gams beziehungsweise der Garnnummer, ein Bereich 23 ausgewählt, in dem der Verlauf der Kennlinie 20 annähernd linear ist. Dem Kennwert 24 entspricht ein Intensitätswert 25 und ein Spannungswert 26. Veränderungen der Position des Fadens 3 im Meßbereich der Sensoreinrichtung 6 führen zu einer Veränderung der Intensität des einfallenden Lichtes und damit zu einer Veränderung der der Signalerzeugung zugrunde liegenden Spannung. Da die Intensität des einfallenden Lichtes als Maß für den Durchmesser des Fadens 3 dient, werden auch die durch Veränderung der Position des Fadens 3 verursachten Änderungen in der Intensität des einfallenden Lichtes als Veränderungen des Durchmessers des Fadens 3 bewertet und führen somit zu Meßfehlern.

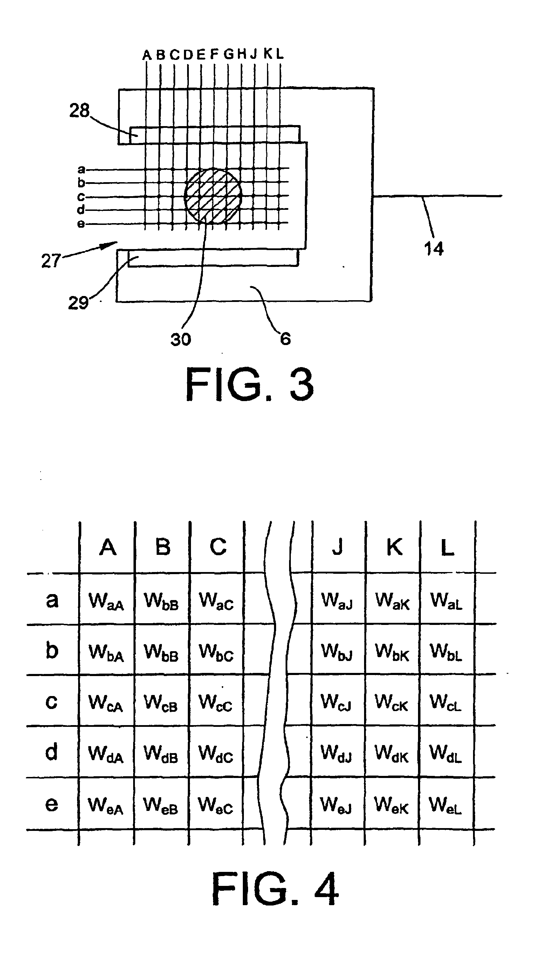

Die Fig. 3 zeigt die Sensoreinrichtung 6 mit einem Meßspalt 27 sowie Sensorelementen 28 und 29. Je nach Ausbildung werden die Sensorelemente 28 und 29 für optische sowie für kapazitive Meßverfahren eingesetzt. Der Meßbereich ist von einem gedachten Punktraster überzogen, wobei die horizontal verlaufenden Reihen von Punkten mit Kleinbuchstaben, die vertikal verlaufenden Reihen von Punkten mit Großbuchstaben bezeichnet sind. Ein Vergleichskörper 30 ist beispielsweise in der Darstellung der Fig. 3 für eine Messung so positioniert, daß sein Querschnfttsmittelpunkt auf dem Rasterpunkt cF liegt. Der Rasterpunkt cF gilt damit als momentane Position des Vergleichskörpers 30.

Die Position des Vergleichskörpers 30 wie auch die Position des laufenden Fadens 3 im Meßbereich der Sensoreinrichtung 6 kann beispielsweise mit am Meßspalt 27 der Sensoreinrichtung 6 positionierten Sensoren detektiertwerden, die in einer Anordnung, wie sie aus der BE-PS 1584684 bekannt ist, um den durch den Vergleichskörper 30 oder den Faden 3 gebildeten Meßkörper herum zusammenwirken. Dabei wird durch das von den Lichtquellen emittierte Licht eine Abschattung oder Abbildung auf den Sensoren bewirkt, und aus Ausdehnung und Lage der Abschattung oder Abbildung ist die Position des Meßkörpers eindeutig und genau bestimmbar.

Durch Abfahren der Rasterpunkte werden den jeweiligen Rasterpunkten zugeordnete Meßwerte empirisch ermittelt. Die Meßwerte werden mit dem bekannten Durchmesser des Vergleichskörpers 30 verglichen und für den jeweiligen Rasterpunkt der Meßfehler beziehungsweise ein Korrekturwert für die jeweilige Messung ermittelt. Sowohl die Meßwerte wie auch die Korrekturwerte können in Form einer Matrix, wie sie Fig. 4 zeigt, mittels der Datenverarbeitungsanlage 15 den Rasterpunkten zugeordnet abgespeichert werden. Zum Beispiel ist dabei der Wert W_{bc} dem Rasterpunkt bC zugeordnet.

Während des Betriebs der Open-End-Spinnmaschine bewegt sich der laufende Faden 3 im Meßspalt 27 der Sensoreinrichtung 6 und befindet sich, während er die Changierbewegung ausführt, beispielsweise auf dem Rasterpunkt cD. Die Kompensation des am Rasterpunkt cD durch die Positionsänderung des Fadens 3 verursachten Meßfehlers erfolgt durch den dem Rasterpunkt cD zugeordneten Korrekturwert.

Die Daten bezüglich der Positionsbestimmung sowie die empirisch ermittelten Korrekturwerte für ein bestimmtes Garn können zum Beispiel an einer ersten Spinnstelle gesammelt werden. Dabei kann die Positionsbestimmung des Fadens 3 über ein mathematisches Verfahren wie zum Beispiel eine strahlengeometrische Berechnung erfolgen, mit dem die jeweilige Position des Fadens 3 aus der jeweiligen Position des Fadenführers 9 berechnet wird. In die Berechnung fließen jeweils die Lage des Fadenführers im zyklischen Ablauf der Changierbewegung wie auch, soweit sie die Position des Fadens 3 im Meßbereich beeinflussen, die Lage und die geometrische Form von Speicherbügeln oder Führungsblechen ein. Von der Datenverarbeitungsanlage 15 können die abgespeicherten Werte über die Leitung 17 als Standardwerte für weitere Spinnstellen oder Spinnmaschinen abgerufen beziehungsweise vorgegeben werden, soweit beispielsweise diese Spinnstellen baugleich mit der Spinnstelle sind, an der die Messungen vorgenommen werden. Der erforderliche Aufwand bei Partiewechseln kann dadurch gering gehalten werden.

## Patentansprüche

1. Verfahren zur berührungslosen Garnüberwachung an einer Spinn- oder Spulmaschine durch eine Sensoreinrichtung (6), die Meßwerte an einem laufenden Faden (3) detektiert, der im Meßbereich der Sensoreinrichtung (6) Positionsänderungen unterliegt und dabei Bewegungen senkrecht zur Fadenlaufrichtung vollführt,
**dadurch gekennzeichnet,**
**daß** für durch Positionsänderungen des Fadens (3) verursachte Meßfehler positionsabhängige Korrekturwerte aus Messungen mit einem Vergleichskörper an unterschiedlichen im Meßbereich verteilten Positionen oder durch Referenzwertermittlung an einer ersten Stelle im Fadenlauf, an der keine Changier bewegung des Fadens (3) stattfindet, ermittelt werden,
**daß** jeweils ein Korrekturwert einer Position zugeordnet und abgespeichert wird,
**daß** die Position des Fadens (3) im Meßbereich ständig ermittelt wird, und
**daß** eine Kompensation des jeweiligen Meßfehlers in Abhängigkeit von der momentanen Position des Fadens (3) durchgeführt wird, indem der einer ermittelten Position zugeordnete, abgespeicherte Korrekturwert mit dem an dieser Position detektierten Meßwert verknüpft wird.

2. Verfahren nach Anspruch 1, **dadurch gekennzeichnet, daß** zur Ermittlung einer durch die Changierbewegung des Fadenführers (9) hervorgerufenen Positionsänderung die Position des Fadenführers (9) überwacht wird und daß die jeweilige Position des Fadens (3) im Meßbereich der Sensoreinrichtung (6) aus der Beziehung zwischen der Position des Fadens (3) und der Position des Fadenführers (9) ermittelt wird.

3. Verfahren nach Anspruch 1 oder 2, **dadurch gekennzeichnet, daß** der Korrekturwert empirisch aus Messungen ermittelt wird, die mit einem Vergleichskörper (30) an unterschiedlichen im Meßbereich der Sensoreinrichtung (6) verteilten Positionen durchgeführt werden.

4. Verfahren nach Anspruch 3, **dadurch gekennzeichnet, daß** als Vergleichskörper (30) für die Messung ein Referenzfaden dient.

5. Verfahren nach Ansprüche 1 oder 2, **dadurch gekennzeichnet, daß** zur Bestimmung des Korrekturwertes Werte aus Vergleichsmessungen dienen, wobei jeweils eine erste Messung an einer ersten Stelle im Fadenlauf erfolgt, an der keine Changierbewegung des Fadens (3) stattfindet, sowie eine zweite Messung an einer zweiten Stelle im Fadenlauf durchgeführt wird, an der der Faden (3) die Changierbewegung vollführt, daß beide Messungen jeweils an derselben Stelle des Fadens (3) erfolgen und daß die jeweiligen Meßergebnisse miteinander verglichen werden.

6. Verfahren nach einem der vorhergehenden Ansprüche, **dadurch gekennzeichnet, daß** zur Meßwertdetektierung eine Kombination von optischem Meßverfahren und kapazitivem Meßverfahren dient.

7. Verfahren nach einem der vorhergehenden Ansprüche, **dadurch gekennzeichnet, daß** die Sensoreinrichtung (6) als Reiniger und gleichzeitig als Fadenwächter genutzt wird.

8. Vorrichtung zur Durchführung des Verfahrens nach Anspruch 1 mit einer Sensoreinrichtung (6) zur Detektion von Meßwerten an einem laufenden Faden (3), der im Meßbereich der Sensoreinrichtung (6) Positionsänderungen unterworfen ist und dabei Bewegungen senkrecht zur Fadenlaufrichtung vollführt, **dadurch gekennzeichnet, daß** die Vorrichtung mindestens ein Mittel zur Bestimmung der Position des Fadens (3) im Meßbereich der Sensoreinrichtung (6) und mindestens eine Einrichtung zum Abspeichern und zur Zuordnung eines Korrekturwertes für den jeweils an der Position detektierten Meßwert aufweist, wobei der Korrekturwert aus Messungen mit einem Vergleichskörper an unterschiedlichen im Meßbereich verteilten Positionen oder durch Referenzwertermittlung an einer ersten Stelle im Fadenlauf, an der keine Changier bewegung des Fadens (3) stattfindet, resultiert.

9. Vorrichtung nach Anspruch 8, **dadurch gekennzeichnet, daß** das Mittel in der Sensoreinrichtung (6) angeordnet ist.

10. Vorrichtung nach Anspruch 9, **dadurch gekennzeichnet, daß** das Mittel aus einer Einrichtung zur Erfassung der Position des Fadenführers (9) und einer Einrichtung zur strahlengeometrischen Berechnung der Position des Fadens (3) in der Sensoreinrichtung (6) ausgebildet ist.

11. Vorrichtung nach einem der Ansprüche 9 oder 10, **dadurch gekennzeichnet, daß** die Sensoreinrichtung (6) einen Meßspalt (27) aufweist und der Meßspalt (27) in Richtung der Changierbewegung des Fadens (3) verläuft.

12. Vorrichtung nach Anspruch 9 bis 11, **dadurch gekennzeichnet, daß** die Sensoreinrichtung (6) als Kombination von Reiniger und Fadenwächter ausgebildet ist.

## Claims

1. Method for contactless yam monitoring on a spinning or bobbin winding machine by a sensor (6) which detects measured values on a running thread (3) subject to changes in position in the measuring range of the sensor (6) and in the process executing movements perpendicular to the direction of the course of the thread, **characterised in that** for measuring errors caused by changes in the position of the thread (3), position-dependent correction values are ascertained from measurements using a comparator at various positions distributed in the measuring range or from ascertaining a reference value at a first point in the thread course at which there is not traversing movement of the thread (3), **in that** one respective correction value is associated with one position and stored, **in that** the position of the thread (3) in the measuring range is constantly ascertained and **in that** the respective measuring error is compensated as a function of the instantaneous position of the thread (3) **in that** the correction value associated with an ascertained position is linked to the measured value detected at this position.

2. Method according to claim 1, **characterised in that** to ascertain a change in position caused by the traversing movement of the thread guide (9), the position of the thread guide (9) is monitored, and **in that** the respective position of the thread (3) in the measuring range of the sensor (6) is ascertained from the relationship between the position of the thread (3) and the position of the thread guide (9).

3. Method according to either claim 1 or claim 2, **characterised in that** the correction value is ascertained empirically from measurements which are carried out using a comparator (30) at various positions distributed in the measuring range of the sensor (6).

4. Method according to claim 3, **characterised in that** a reference thread is used as comparator (30) for the measurement.

5. Method according to either claim 1 or claim 2, **characterised in that** to determine the correction value, values from comparison measurements are used, a respective first measurement being made at a first point in the thread course at which there is no traversing movement of the thread (3) and a second measurement is carried out at a second point in the thread course at which the thread (3) executes the traversing movement, **in that** both measurements are each made at the same point of the thread (3), and **in that** the respective measuring results are compared with one another.

6. Method according to any one of the preceding claims, **characterised in that** for measured value detection a combination of optical measuring methods and capacitive measuring methods are used.

7. Method according to any one of the preceding claims, **characterised in that** the sensor (6) is used as a clearer and simultaneously as a thread monitor.

8. Device for carrying out the method according to claim 1 comprising a sensor (6) for detecting measured values on a running thread (3) which is subject to changes in position in the measuring range of the sensor (6) and in the process executes movements perpendicular to the direction of the course of the thread, **characterised in that** the device comprises at least one means for determining the position of the thread (3) in the measuring range of the sensor (6) and at least one device for storing and for allocating a correction value to the respective measured value detected at the position, the correction value being obtained from measurements using a comparator at various positions distributed in the measuring range or from ascertaining a reference value at a first point in the thread course at which there is not traversing movement of the thread (3).

9. Device according to claim 8, **characterised in that** the means is arranged in the sensor (6).

10. Device according to claim 9, **characterised in that** the means is constructed in the sensor (6) from a device for detecting the position of the thread guide (9) and a device for radiation-geometric calculation of the position of the thread (3).

11. Device according to either claim 9 or claim 10, **characterised in that** the sensor (6) has a measuring gap (27) and the measuring gap (27) extends in the direction of the traversing movement of the thread (3).

12. Device according to claims 9 to 11, **characterised in that** the sensor (6) is constructed as a combination of clearer and thread monitor.

## Revendications

1. Procédé pour surveiller à distance le fil dans un métier à filer ou un bobinoir à l'aide d'un capteur (6) qui relève des valeurs sur un fil en mouvement (3) subissant dans la zone de mesure du capteur (6) des changements de position et effectuant de ce fait des mouvements perpendiculaires à la direction de déplacement du fil, **caractérisé en ce que** l'on détermine des valeurs de correction en fonction de la position pour rectifier des erreurs de mesure provoquées par des changements de position du fil (3), à partir de mesures effectuées à l'aide d'un corps de comparaison, en différents points répartis dans la zone de mesure ou par la détermination d'une valeur de référence au niveau d'un premier point du tracé du fil au niveau duquel le fil n'effectue pas de mouvement de va-et-vient, **en ce qu'**une valeur de correction est chaque fois associée à une position et mémorisée, **en ce que** l'on détermine en permanence la position du fil (3) dans la zone de mesure, et **en ce que** l'on corrige l'erreur de mesure en fonction de la position momentanée du fil (3), en rattachant la valeur de correction associée à une position déterminée à une valeur relevée pour cette position.

2. Procédé selon la revendication 1, **caractérisé en ce que**, pour déterminer un changement de position provoqué par le mouvement de va-et-vient du guide-fil 1 (9), on surveille la position du guide-fil (9), et **en ce que** la position du fil (3) dans la zone de mesure du capteur (6) est déterminée à partir de la relation entre la position du fil (3) et la position du guide-fil (9),

3. Procédé selon la revendication 1 ou 2, **caractérisé en ce que** la valeur de correction est déterminée de façon empirique à partir de mesures qui sont effectuées à l'aide d'un corps de comparaison (30) en différents points répartis dans la zone de mesure du capteur (6).

4. Procédé selon la revendication 3, **caractérisé en ce qu'**un fil de référence sert de corps de comparaison (30) pour la mesure.

5. Procédé selon les revendications 1 ou 2, **caractérisé en ce que**, pour déterminer la valeur de correction, on utilise des valeurs issues de mesures comparatives, une première mesure étant toujours effectuée en un premier point du tracé du fil où ledit fil (3) n'effectue pas de mouvement de va-et-vient, et une deuxième mesure étant réalisée en un deuxième point du tracé du fil au niveau duquel le fil (3) effectue le mouvement de va-et-vient, **en ce que** les deux mesures sont chaque fois réalisées sur le même point du fil (3), et **en ce que** les résultats de mesure sont chaque fois comparés entre eux,

6. Procédé selon l'une des revendications précédentes, **caractérise en ce que**, pour relever des valeurs, on combine un procédé de mesure optique et un procédé de mesure capacitif.

7. Procédé selon l'une des revendications précédentes, **caractérisé en ce que** le capteur (6) est simultanément employé comme purgeur et comme casse-fil.

8. Dispositif pour mettre en oeuvre le procédé selon la revendication 1, comprenant un capteur (6) pour relever des valeurs sur un fil en mouvement (3) qui subit dans la zone de mesure du capteur (6) des changements de position et effectue ce faisant des mouvements perpendiculaires à la direction de déplacement du fil, **caractérisé en ce que** le dispositif comprend au moins un moyen pour déterminer la position du fil (3) dans la zone de mesure du capteur (6) et au moins un dispositif pour enregistrer et pour associer une valeur de correction à la valeur relevée correspondante au niveau de ladite position, dans lequel la valeur de correction résulte à partir de mesures effectuées à l'aide d'un corps de comparaison en différents points répartis dans la zone de mesure ou par la détermination d'une valeur de référence au niveau d'un premier point du tracé du fil au niveau duquel le fil n'effectue pas de mouvement de va-et-vient.

9. Dispositif selon la revendication 8, **caractérisé en ce que** le moyen est situé dans le capteur (6).

10. Dispositif selon la revendication 9, **caractérisé en ce que** le moyen est constitué par un dispositif pour relever la position du guide-fil (9) et par un dispositif pour le calcul par géométrie de rayonnement de la position du fil (3) dans le capteur (6).

11. Dispositif selon la revendication 9 ou 10, **caractérisé en ce que** le capteur (6) présente une fente de mesure (27), et **en ce que** la fente de mesure (27) s'étend dans la direction du mouvement de va-et-vient du fil (3).

12. Dispositif selon l'une des revendications 9 à 11, **caractérisé en ce que** le capteur (6) est une combinaison d'un purgeur et d'un casse-fil.
